# EUROPÄISCHE PATENTSCHRIFT

(11) **EP 1 764 270 B1**
(45) Veröffentlichungstag und Bekanntmachung des Hinweises auf die Patenterteilung: **25.04.2012**
(21) Anmeldenummer: 06018089.0
(22) Anmeldetag: 30.08.2006
(51) Int. Cl.: B60R 21/0136, G01L 11/04

(54) **Vorrichtung zum Personen- und Kollisionsschutz an einem Fahrzeug**
Device for the protection of persons and accidents in a vehicle
Dispositif pour la protection des personnes et des accidents d'un véhicule

(30) Priorität: 05.09.2005 AT 14492005; 30.05.2006 EP 06011054
(43) Veröffentlichungstag der Anmeldung: 21.03.2007
(73) Patentinhaber: Matlschweiger, Klaus, 8421 Wolfsberg im Schwarzautal (AT); Schörkmaier, Martin, Dipl.-Ing, 8010 Graz (AT)
(72) Erfinder: Matlschweiger, Klaus, 8421 Wolfsberg im Schwarzautal (AT); Schörkmaier, Martin, Dipl.-Ing, 8010 Graz (AT)
(74) Vertreter: Dilg, Haeusler, Schindelmann Patentanwaltsgesellschaft mbH

(56) Entgegenhaltungen:
- EP-A- 1 535 805
- EP-A2- 0 305 654
- DE-A1- 10 206 351
- DE-C1- 10 144 266

## Beschreibung

Die Erfindung betrifft eine Vorrichtung zum Personen- und Kollisionsschutz an einem Fahrzeug gemäß dem Oberbegriff von Patentanspruch 1.

In der EU sterben jährlich etwa 8.000 Fußgänger und Radfahrer bei Verkehrsunfällen und weitere 300.000 werden verletzt.

Am 19. Februar 2003 legte die Kommission einen Vorschlag für eine Rahmenrichtlinie zur Fußgängersicherheit vor. Er zielt darauf ab, die Zahl der bei Unfällen im Straßenverkehr getöteten und verletzten Fußgänger durch Konstruktionsänderungen im Frontbereich von Kraftfahrzeugen zu vermindern. Der Vorschlag beruht auf einer freiwilligen Selbstverpflichtung, die europäische, japanische und koreanische Automobilhersteller in den Jahren 2001 und 2002 eingegangen sind.

Ende 2004 hat die europäische Kommission nun diese EU-Rahmenrichtlinie verabschiedet, die nachhaltige Auswirkungen für alle Fahrzeughersteller haben wird. Ab dem 1.10.2005 beginnt die erste Phase. Dann werden neue Fahrzeugtypen nur noch zugelassen, wenn sie eine Reihe von Fußgängerschutztests erfolgreich absolviert haben. In der Anfangsphase sind wichtige Grenzwerte bei Kopf- und Beinimpaktor einzuhalten.

Die Phase 2 der EU-Rahmenrichtlinie zum Fußgängerschutz tritt für alle neuen Fahrzeugtypen ab 1.9.2010 in Kraft (ab 1.9.2015 für alle Straßenneuzulassungen). Sie sieht weitere Zwangserfüllungen und eine Verschärfung der Grenzwerte vor. Schwerpunkt soll dabei auf einem zusätzlichen Upper-Leg-Test liegen, der das Auftreffen des Hüftbereichs auf die Haubenvorderkante eines Kraftfahrzeuges nachbildet. Mit diesem Test werden die Automobilhersteller schwer gefordert, denn das Design der Fahrzeugfront wird die Ergebnisse enorm beeinflussen. Es schwanken beispielsweise die Energien, die beim Test vorgeschrieben sind, zwischen 200 Joule und 700 Joule - abhängig vom Fahrzeugaufbau. Entsprechend sind unterschiedlich große Deformationswege am Fahrzeug notwendig, im Extremfall bis zu 200 mm (siehe: COMMISSION OF THE EUROPEAN COMMUNITIES, Proposal for a DIRECTIVE OF THE EUROPEAN PARLIAMENT AND OF THE COUNCIL relating to the protection of pedestrians and other vulnerable road users in the event of a collision with a motor vehicle and amending Directive 70/156/EEC, Brussels, 19.2.2003 COM(2003) 67 final).

Die Automobilindustrie arbeitet bislang an zwei verschiedenen Ansätzen: Aktive Systeme, die im Falle eines Unfalles durch verschiedene Sensorsysteme aktiviert werden; und passive Systeme, die als Deformationselemente oder speziell entwickelte Motorhauben (Beispiel Sandwichkonzept) in das Fahrzeug implementiert sind, und keiner Sensorik bedürfen.

In modernen Fahrzeugen wird der Raum unter der Motorhaube fast zur Gänze, z.B. durch Aggregate, genutzt. Das bedeutet, dass in vielen Fällen kein ausreichender Freiraum zwischen starren Elementen und den Motorhaubeninnenteilen zur Verfügung steht. Dieser Problematik kann durch den Einsatz von aktiven Systemen begegnet werden, die die Motorhaube in einer definierten Weise (Zeit, Weg), d.h. innerhalb einer gewissen Zeit ab einer Kollision und einem gewissen Betrag, anheben. Um ein solches System aktivieren zu können, wird eine sehr komplizierte und aufwendige Sensorik benötigt. Die Problematik darin liegt eindeutig an der Personenerkennung.

Bereits bekannte Systeme beinhalten Lichtleiterkomponenten in Kombination mit Beschleunigungssensoren. Diese können zwar den Anprall eines Körpers an die Fahrzeugfront detektieren, aber nur sehr aufwendig und wenig zuverlässig die Art des auftreffenden Körpers bestimmen. Da die Auslösung einer aktiven Motorhaube - eine aktive Motorhaube springt im Falle einer Fußgängerkollision ein Stück weit auf und dämpft so den Aufprall der Person auf dieselbe - oder eines Fußgängerairbags ähnlich wie bei im Fahrzeuginnenraum verwendeten Airbags ein irreversibler Prozess ist, soll jegliche Fehlauslösung eines Fußgängerschutzsystems vermieden werden, da die Auslösung des Schutzsystems den Austausch der für dessen Antrieb benötigten Gasgeneratoren notwendig macht. Noch schwerer wiegen jedoch die Gefahren, die durch eine Fehlauslösung entstehen können. So kann die fehlaktivierte Motorhaube bei Kollision mit beispielsweise einem Baum weit in den Fahrgastraum geschoben werden und stellt in solch einem Fall ein hohes Gefährdungspotential dar. Unter einer Fehlauslösung versteht man eine Auslösung nach einem Zusammenstoß, an dem keine Personen oder größere Tiere beteiligt sind.

In der EP 1 535 805 A1 wird ein Aufprallfühlelement offenbart. Das Aufprallfühlelement weist eine abgedichtete Kammer, die mit einem Druckmedium gefüllt ist, und zumindest eine Oberflächenschallwellenvorrichtung, die angegliedert an die abgedichtete Kammer zum Fühlen eines Drucks innerhalb der Druckkammer, auf. Die abgedichtete Kammer ist eingerichtet, um in einem Fahrzeug an einer Position angeordnet zu sein, wo ein Aufprall während einer Kollisionssituation gefühlt werden kann. Die Oberflächenschallwellenvorrichtung beinhaltet zumindest einen Oberflächenschallwellenresonator und eine Antenne zum entfernten Kommunizieren mit einer Steuereinheit, die innerhalb des Fahrzeugs angeordnet ist.

Aufgabe der Erfindung ist es daher eine Vorrichtung zum Personen- und Kollisionsschutz an einem Fahrzeug der eingangs genannten Art anzugeben, mit welcher die genannten Nachteile vermieden werden können, und welche zuverlässig und in kurzer Zeit eine Bestimmung der Art eines Kollisionshindernisses, insbesondere ob es sich dabei um einen Menschen handelt oder nicht, ermöglicht, um gegebenenfalls Schutzmaßnahmen zu ergreifen.

Diese Aufgabe wird durch eine Vorrichtung mit den Merkmalen gemäß dem unabhängigen Patentanspruch gelöst. Vorteilhafte Ausgestaltungen sind in den abhängigen Patentansprüchen angegeben.

Erfindungsgemäß wird dies dadurch erreicht, dass eine Vorrichtung zum Personen- und Kollisionsschutz an einem Fahrzeug bereitgestellt wird, mit wenigstens einem Gasschallsensor, der an einem Außenteil des Fahrzeugs akustisch angekoppelt, und mit einer Signalverarbeitungseinheit verbunden ist, zur Analyse eines Schallsignals, welches bei einem Zusammenstoß des Fahrzeugs mit einem Hindernis erzeugt und von dem Gasschallsensor detektiert wird. An dem Außenteil des Fahrzeugs ist wenigstens ein gasgefüllter Hohlkörper angeordnet, sodass bei einem Zusammenstoß des Fahrzeugs mit dem Hindernis der Hohlkörper in Kontakt mit dem Hindernis steht, und dass der Gasschallsensor derart mit dem Hohlkörper zusammenwirkt, dass dieser den durch den Zusammenstoß des Fahrzeugs mit dem Hindernis in dem Hohlkörper hervorgerufenen Gasschall detektiert. Die Signalverarbeitungseinheit weist Mittel zur Bestimmung eines Hindernisses als menschliches Hindernis auf, wobei der wenigstens eine Gasschallsensor als Kondensatormikrophon ausgebildet ist, und wobei im Bereich einer Mikrophonmembran des Kondensatormikrophons ein elektrostatischer Aktuator angeordnet ist.

Dadurch kann eine gegen störende Umwelteinflüsse weitestgehend unempfindliche Vorrichtung geschaffen werden, welche eine schnelle und genaue Bestimmung der Art eines Kollisionshindernisses, insbesondere ob es sich bei dem Kollisionshindernis um einen Menschen handelt oder nicht, ermöglicht. Dadurch kann in der geringen Zeit zwischen einem Zusammenstoß mit einem Hindernis und dem letztmöglichen Zeitpunkt einer sinnvollen Aktivierung einer sog. Fußgängerschutzeinrichtung eine solche unter weitestgehender Vermeidung von Fehlauslösungen aktiviert werden, sodass nach der Kollision mit dem Fußgänger ein Aufprall des Fußgängers an Teilen der Karosserie eines. Fahrzeugs bei voll aktivierter Fußgängerschutzeinrichtung erfolgt, wobei die Gefährdung der Fahrzeuginsassen durch eine fehlerhaft auslösende Fußgängerschutzeinrichtung minimiert werden kann.

In Weiterführung der Erfindung kann vorgesehen sein, dass der wenigstens eine gasgefüllte Hohlkörper an einem Außenbereich wenigstens eines Stoßfängers des Fahrzeugs angeordnet ist. Dadurch kann sichergestellt werden, dass der erste Kontakt, den ein Hindernis mit dem Fahrzeug eingeht, zu einem Schallereignis führt, welches durch den Gasschallsensor im Inneren des Hohlkörpers detektiert wird.

In diesem Zusammenhang kann in Weiterführung der Erfindung vorgesehen sein, dass der wenigstens eine gasgefüllte Hohlkörper in der Form wenigstens eines Schallführungskanals ausgebildet ist, und dass der wenigstens eine Schallführungskanal Abmessungen aufweist, welche klein sind im Bezug zu den Wellenlängen in dem Frequenzbereich, welcher zur Analyse des bei einem Zusammenstoß des Fahrzeugs mit dem Hindernis in dem Hohlkörper hervorgerufenen Gasschalls vorgesehen ist, sodass der gasgefüllte Hohlkörper in diesem Frequenzbereich frei von stehenden Schallwellen ist. Durch das Fehlen stehender Wellen in dem Hohlkörper können Verdeckungseffekte vermieden werden, welche ansonsten zu einer Verschlechterung des Messergebnisses und damit zu einer Erhöhung der Fehlerquote führen. Stehende Wellen weisen sehr stark ausgeprägte Schalldruckmaxima, sog. Druckbäuche auf. Sofern ein Gasschallsensor im Bereich eines solchen Druckbauches angeordnet sein sollte, kann es zu Verdeckungs- und Übersteuerungseffekten kommen, welche eine exakte Analyse des Schallsignals beeinträchtigen können.

Gemäß einer weiteren Ausführungsform der Erfindung kann vorgesehen sein, dass an wenigstens einem Außenteil des Fahrzeuges, insbesondere am Außenbereich der wenigstens einen Stoßfänger, wenigstens ein Kontaktsensor angeordnet ist, welcher mit der Signalverarbeitungseinheit verbunden ist. Dadurch können auf einem weiteren Weg Fehlauslösungen verhindert werden, indem für ein Auslösen der Fußgängerschutzeinrichtung eine Aktivierung des Kontaktsensors, etwa durch einen Anprall der Stoßfänger an ein Hindernis erforderlich ist. Zusätzlich kann vorgesehen sein, dass die Signalverarbeitungseinheit erst in Betrieb genommen wird, wenn der Kontaktsensor aktiviert wurde, wodurch der Stromverbrauch und die Alterung der Vorrichtung reduziert werden kann, und weitere Fehlauslösungen verhindert werden können, wodurch die Vorrichtung noch sicherer wird.

Gemäß wieder einer anderen Ausführungsform der Erfindung kann vorgesehen sein, dass der wenigstens eine Gasschallsensor in einem schwingungsdämpfenden Medium, insbesondere beinhaltend wenigstens ein Elastomer, vorzugsweise beinhaltend Silikonkautschuk, eingebettet ist. Dadurch kann störender Körperschall von dem wenigsten einen Gasschallsensor ferngehalten werden, wodurch die Bestimmung der Art des Hindernisses weiter präzisiert und Fehlauslösungen weiter verhindert werden können.

Eine Variante der Erfindung kann darin bestehen, dass der wenigstens eine Gasschallsensor als Kondensatormikrophon, insbesondere als Elektretmikrophon, ausgebildet ist. Dadurch ist eine besonders detailgetreue und wirklichkeitsnahe Aufnahme des Gasschalls möglich.

In weiterer Ausgestaltung der Erfindung kann vorgesehen sein, dass im Bereich einer Mikrophonmembran des Kondensatormikrophons ein elektrostatischer Aktuator angeordnet ist. Dadurch kann die Membran des Kondensatormikrophons zu Schwingungen angeregt und so Funktion des Kondensatormikrophons überprüft werden, wodurch ein Versagen der Vorrichtung aufgrund eines schadhaften Mikrophons verhindert werden kann.

In Weiterbildung der Erfindung kann vorgesehen sein, dass der elektrostatische Aktuator wenigstens ein elektrisch leitendes Gitter aufweist, welches vor der Mikrophonmembran angeordnet ist, und dass das Gitter von einem Signalgenerator, welcher insbesondere Teil der Signalverarbeitungseinheit ist, mit einem vorgebbaren Wechselspannungssignal beaufschlagbar ist. Dadurch ist ein besonders einfacher Aufbau gegeben, wobei das Gitter neben der Funktion als elektrostatischer Aktuator auch die Mikrophonmembran schützt. Weiters kann die Signalverarbeitungseinheit Selbsttests durchführen, und so rechtzeitig einen Systemausfall melden.

Eine andere mögliche Ausführungsform kann darin bestehen, dass die Signalverarbeitungseinheit eine Transformationseinheit aufweist, zur Transformation wenigstens eines von dem Gasschallsensor detektierten Schallsignals vom Zeitbereich in einen Bildbereich. Dadurch kann neben dem Zeitverhalten des Schallsignals etwa auch das Frequenzverhalten analysiert und bewertet werden.

Gemäß einer weiteren Ausbildung der Erfindung kann vorgesehen sein, dass die Transformationseinheit als Wavelet-Transformationseinheit ausgebildet ist. Dadurch kann sowohl eine hohe Zeit, wie auch Frequenzauflösung erreicht werden. In Weiterführung der Erfindung kann vorgesehen sein, dass die Signalverarbeitungseinheit eine Datenbank mit wenigstens einem gespeicherten Fußgängerreferenzsignal aufweist. Dadurch kann für die Bewertung des Schallsignals ein tatsächlich gemessenes Fußgängerreferenzsignal herangezogen werden.

In diesem Zusammenhang kann in Weiterführung der Erfindung vorgesehen sein, dass die Signalverarbeitungseinheit eine Einheit zum Vergleich des in den Bildbereich transformierten Schallsignals mit dem wenigstens einen in der Datenbank gespeicherten Fußgängerreferenzsignal aufweist. Dadurch kann das Schallsignal mit den gespeicherten Fußgängerreferenzsignalen vergleichen werden, wodurch die Bestimmung der Art des Hindernisses sehr exakt wird.

Gemäß einer weiteren Ausführungsform der Erfindung kann vorgesehen sein, dass die Signalverarbeitungseinheit eine Fußgängerschutzeinrichtung ansteuert. Dadurch kann, sofern bestimmt wird, dass es sich bei dem Hindernis um einen Fußgänger handelt, eine Fußgängerschutzeinrichtung ausgelöst werden, um das Leben des Fußgängers zu retten.

Ein Verfahren zum Auslösen einer Fußgängerschutzeinrichtung an einem Fahrzeug wird offenbart, bei dem im Bereich eines Außenteils des Fahrzeugs von einem Gasschallsensor ein Gasschall detektiert, welcher in ein Schallsignal umgewandelt und mit wenigstens einem gespeicherten Fußgängerreferenzsignal verglichen wird, und bei Überschreiten eines vorgebbaren Grades der Ähnlichkeit des Schallsignals und des Fußgängerreferenzsignals die Fußgängerschutzeinrichtung ausgelöst wird.

Erfindungsgemäß wird dies dadurch erreicht, dass der Gasschall im Inneren eines gasgefüllten Hohlkörpers detektiert wird.

Dadurch können bei einem Verfahren störende Umwelteinflüsse weitestgehend ausgeschlossen werden, wodurch eine schnelle und genaue Bestimmung der Art eines Kollisionshindernisses, insbesondere ob es sich bei dem Kollisionshindernis um einen Menschen handelt oder nicht, möglich ist. Dadurch kann in der geringen Zeit zwischen einem Zusammenstoß mit einem Hindernis und dem letztmöglichen Zeitpunkt einer sinnvollen Aktivierung einer sog. Fußgängerschutzeinrichtung, eine solche unter weitestgehender Vermeidung von Fehlauslösungen aktiviert werden, sodass nach der Kollision mit dem Fußgänger ein Aufprall des Fußgängers an Teilen der Karosserie eines Fahrzeugs bei voll aktivierter Fußgängerschutzeinrichtung erfolgt, wobei die Gefährdung der Fahrzeuginsassen durch eine fehlerhaft auslösende Fußgängerschutzeinrichtung minimiert werden kann.

In Weiterführung der Erfindung kann vorgesehen sein, dass der vom Gasschallsensor detektierte Gasschall nur dann mit dem wenigstens einen gespeicherten Fußgängerreferenzsignal verglichen wird, wenn ein Kontaktsensor einen Zusammenstoß des Fahrzeugs mit einem Gegenstand anzeigt. Dadurch können Fehlauslösungen zusätzlich verhindert werden, indem für ein Auslösen der Fußgängerschutzeinrichtung eine Aktivierung des Kontaktsensors, etwa durch einen Anprall der Stoßfänger an ein Hindernis erforderlich ist. Zusätzlich kann vorgesehen sein, dass die Signalverarbeitungseinheit erst in Betrieb genommen wird, wenn der Kontaktsensor aktiviert wurde, wodurch der Stromverbrauch und die Alterung der Vorrichtung reduziert werden kann, und weitere Fehlauslösungen verhindert werden können, wodurch die Vorrichtung noch sicherer wird.

Gemäß einer weiteren Ausführungsform der Erfindung kann vorgesehen sein, dass das vom Gasschallsensor detektierte Geräusch vor dem Vergleich mit dem Fußgängerreferenzsignal wavelettransformiert wird. Dadurch kann neben dem Zeitverhalten des Schallsignals etwa auch das Frequenzverhalten analysiert und bewertet werden, wobei durch die Wavelet-Transformation sowohl eine hohe Zeit, wie auch Frequenzauflösung erreicht werden kann. Gemäß wieder einer anderen Ausführungsform der Erfindung kann vorgesehen sein, dass die Fußgängerschutzeinrichtung beim Überschreiten einer vorgebbaren Grenzgeschwindigkeit deaktiviert wird. Dadurch kann vermieden werden, dass die Fußgängerschutzeinrichtung bei Geschwindigkeiten ausgelöst wird, bei denen diese nicht mehrt wirksam ist, weil der Fußgänger auch mit aktivierter Fußgängerschutzeinrichtung nicht mehr gerettet werden kann, und durch die Fußgängerschutzeinrichtung eine Gefährdung der Fahrzeuginsassen einhergehen würde.

Eine Variante der Erfindung kann darin bestehen, dass das wenigstens eine Fußgängerreferenzsignal durch Kollision eines Prüfkörpers, insbesondere eines Legform-Dummies und/oder eines Post-Mortem-Human-Subject, mit wenigstens einem Fahrzeug, insbesondere einer Fahrzeugfront, ermittelt wird. Dadurch kann auf einfachem Weg wenigstens ein Fußgängerreferenzsignal ermittelt werden, wodurch eine sichere Auswertung des Schallsignals erreicht wird.

In diesem Zusammenhang kann in Weiterführung der Erfindung vorgesehen sein, dass eine vorgebbare Anzahl Fußgängerreferenzsignale mit einer vorgebbaren Anzahl unterschiedlich gestalteter Prüfkörper ermittelt werden. Dadurch können auf einfachem Weg eine große Anzahl an Fußgängerreferenzsignalen aufgezeichnet werden, wodurch die Auswertung des Schallsignals genauer wird, und Fehlauslösungen vermindert werden. Durch diese Maßnahme gelingt es, auch unterschiedliche Kollisionsgeräusche, wie sie bei Kollisionen mit Fußgängern entstehen können, als solche zu identifizieren, zumal die Kollisionsgeräusche für unterschiedliche Fußgänger auch unterschiedlich sind. So können unterschiedliche Gewichtsklassen der Fußgänger und unterschiedlicher Körperbau derselben berücksichtigt werden.

Die Erfindung wird unter Bezugnahme auf die beigeschlossenen Zeichnungen, in welchen lediglich besonders bevorzugte Ausführungsformen sowie Graphen beispielhaft dargestellt sind, näher beschrieben. Dabei zeigt:
Fig. 1 ein Blockschaltbild einer bevorzugten Ausführung einer erftndungsgemäßen Vorrichtung;
Fig. 2 eine vereinfachte Darstellung eines bevorzugten Aufbaus einer Sensoreinheit für eine erfindungsgemäße Vorrichtung im Seitenriss und Grundriss;
Fig. 3 detaillierte Darstellung eines Schallsignals bei Zusammenstoß mit einem Hindernis;
Fig. 4 eine vereinfachte Darstellung eines bevorzugten Anordnung zweier Sensoreinheiten und eines gasgefüllten Hohlraums an einem Außenteil eines Fahrzeugs im Seitenriss und Grundriss;
Fig. 5 Darstellung eines Schallsignals bei Zusammenstoß mit einem Standard-Legform;
Fig. 6 Darstellung eines Schallsignals bei Zusammenstoß mit einem PVC-Rohr;
Fig. 7 Darstellung eines Schallsignals bei Zusammenstoß mit einem Rinderfuß; und
Fig. 8 Darstellung eines Schallsignals bei Zusammenstoß mit einem Fußball.

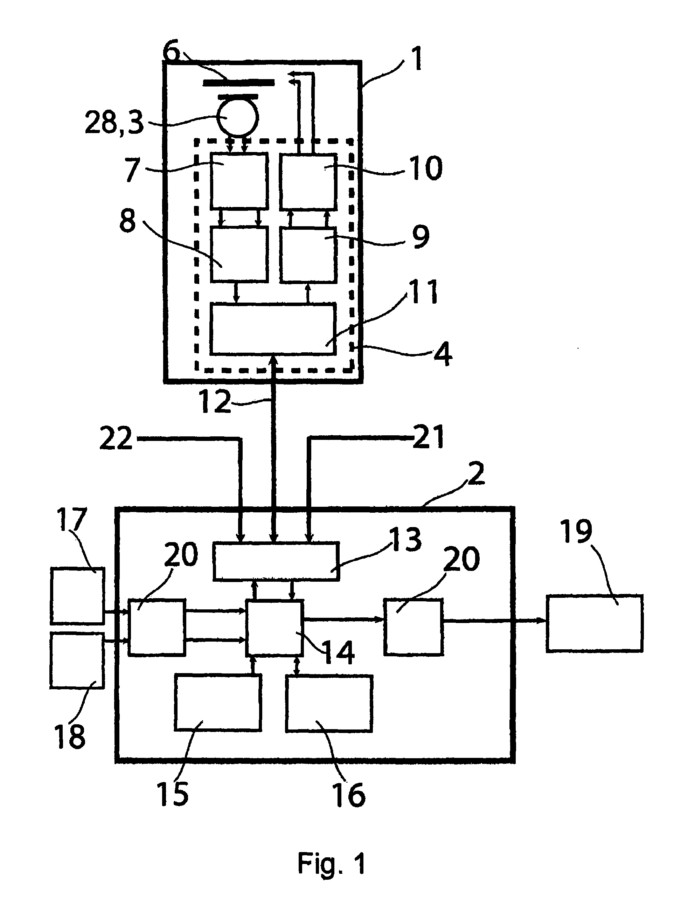

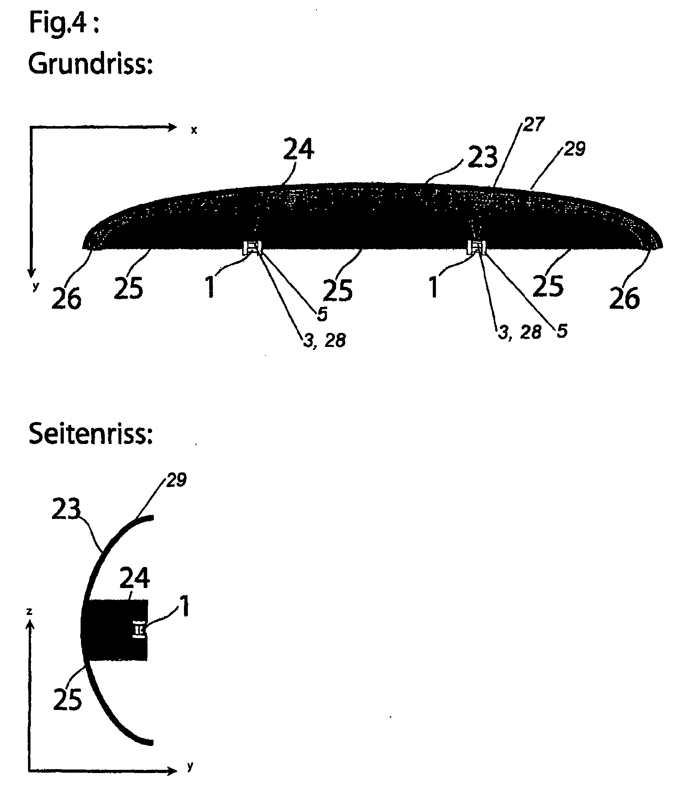

Die Fig. 1 zeigt ein Blockschaltbild einer besonders bevorzugten Ausführungsform einer Vorrichtung zum Personen- und Kollisionsschutz an einem Fahrzeug, wie diese schematisch in der Fig. 4 dargestellt ist, mit wenigstens einem Gasschallsensor 28, der an einem Außenteil des Fahrzeugs akustisch angekoppelt, und mit einer Signalverarbeitungseinheit 2 verbunden ist, zur Analyse eines Schallsignals, welches bei einem Zusammenstoß des Fahrzeugs mit einem Hindernis erzeugt und von dem Gasschallsensor 28 detektiert wird, und die Signalverarbeitungseinheit 2 Mittel zur Bestimmung der Art des Hindernisses aufweist, wobei an dem Außenteil des Fahrzeugs wenigstens ein gasgefüllter Hohlkörper 24 angeordnet ist, sodass bei einem Zusammenstoß des Fahrzeugs mit dem Hindernis der Hohlkörper 24 in Kontakt mit dem Hindernis steht, und dass der Gasschallsensor 28 derart mit dem Hohlkörper 24 zusammenwirkt, dass dieser den durch den Zusammenstoß des Fahrzeugs mit dem Hindernis in dem Hohlkörper 24 hervorgerufenen Gasschall detektiert.

Dadurch kann eine gegen störende Umwelteinflüsse weitestgehend unempfindliche Vorrichtung geschaffen werden, welche eine schnelle und genaue Bestimmung der Art eines Kollisionshindernisses, insbesondere ob es sich bei dem Kollisionshindernis um einen Menschen handelt oder nicht, ermöglicht. Dadurch kann in der geringen Zeit zwischen einem Zusammenstoß mit einem Hindernis und dem letztmöglichen Zeitpunkt einer sinnvollen Aktivierung einer sog. Fußgängerschutzeinrichtung 19 eine solche unter weitestgehender Vermeidung von Fehlauslösungen aktiviert werden, sodass nach der Kollision mit dem Fußgänger ein Aufprall des Fußgängers an Teilen der Karosserie eines Fahrzeugs bei voll aktivierter Fußgängerschutzeinrichtung 19 erfolgt, wobei die Gefährdung der Fahrzeuginsassen durch eine fehlerhaft auslösende Fußgängerschutzeinrichtung 19 minimiert werden kann.

Die Erfindung beruht darauf, dass bei einer Kollision eines menschlichen Körpers mit einem Fahrzeug ganz charakteristische Geräusche bzw. Schallsignale entstehen, die sich von Geräuschen bei einer Kollision des Fahrzeugs mit anderen Gegenständen, wie mit einem Mast, mit einem Baum, mit einem anderen Fahrzeug, etc. entstehen, erheblich unterscheiden. Hiedurch ist es möglich, die Fußgängerschutzeinrichtung 19 nur dann zu aktivieren, wenn diese charakteristischen Kollisionsgeräusche zwischen einem Fahrzeug und einem menschlichen Körper tatsächlich auftreten. Bei einem Fahrzeug kann es sich um jede Art Fahrzeug handeln. Bevorzugt ist der Einsatz bei sog. Personenkraftwagen. Es kann jedoch auch der Einsatz bei jedem anderen Fahrzeug, unabhängig von dessen Größe und der Art des Antriebs vorgesehen sein.

Bei einer erfindungsgemäßen Vorrichtung, wie diese in der Fig. 4 in Grund- und Seitenriss beispielhaft dargestellt ist, ist an einem Außenteil eines Fahrzeugs wenigstens ein gasgefüllter Hohlkörper 24 angeordnet. Bevorzugt ist vorgesehen, dass der wenigstens eine gasgefüllte Hohlkörper 24, welcher in der weiteren Folge kurz als Hohlkörper 24 bezeichnet wird, an einem Außenbereich 23 wenigstens eines Stoßfängers 29 des Fahrzeugs angeordnet ist. Dabei kann der Stoßfänger 29 an jedem Außenteil des Fahrzeugs angeordnet sein kann, wobei bevorzugt Außenteile des Fahrzeugs vorgesehen sein, an denen Zusammenstöße mit Hindernissen zu erwarten sind.

Erfindungsgemäß ist vorgesehen, dass jedem gasgefüllten Hohlkörper 24 wenigstens ein Gasschallsensor 28, welcher vorzugsweise als Kondensatormikrophon 3, insbesondere als Elektretmikrophon, ausgebildet ist, zugeordnet ist, um den durch einen Aufprall eines Hindernisses auf einen Bereich des Hohlkörpers 24 in diesem hervorgerufenen Gasschall zu detektieren. Durch die Verwendung eines Kondensatormikrophons 3 kann eine besonders gute und hoch auflösende Aufnahme des Gasschalls erzielt werden. Durch den Einsatz eines Elektretmikrophons kann auf die bei einem Kondensatormikrophon 3 ansonsten notwendige Phantornspeisung verzichtet werden.

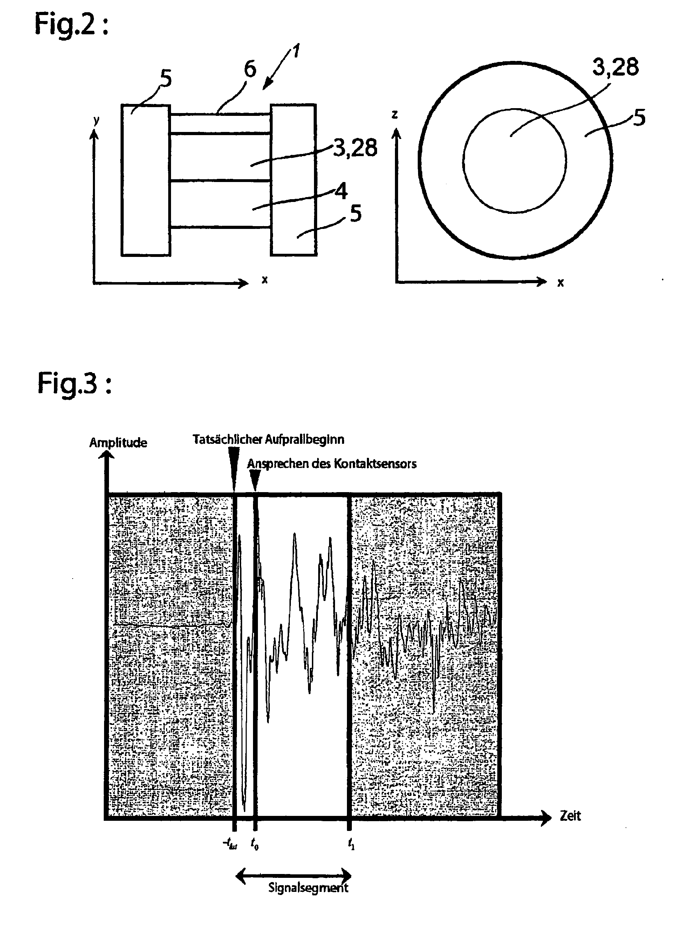

Fig. 2 zeigt eine bevorzugte Ausführung einer erfindungsgemäßen Einheit aus Gasschallsensor 28 und direkt nachgeschalteter Signalaufbereitungseinheit 4. Die derart gebildete Sensoreinheit 1 umfasst weiters bevorzugt einen elektrostatischen Aktuator 6 im Bereich der Membran des Kondensatormikrophons 3 um diese für Testzwecke auszulenken. Der elektrostatische Aktuator 6, welcher insbesondere als Metallgitter ausgebildet sein kann, kann darüber hinaus als Schutz für den Gasschallsensor 28 dienen. Wie in Fig. 2 dargestellt kann bevorzugt vorgesehen sein, dass der wenigstens eine Gasschallsensor 28 bzw. die diesen umfassende Sensoreinheit 1 in einem schwingungsdämpfenden Medium, insbesondere beinhaltend wenigstens ein Elastomer 5, vorzugsweise beinhaltend Silikonkautschuk, eingebettet ist. Zur Vermeidung einer etwaigen Anregung der Sensoreinheit 1 durch Körperschallschwingungen der Fahrzeugkarosserie ist die elastische Halterung 5 bevorzugt genau auf dessen Masse abgestimmt.

Bei der in Fig. 4 dargestellten Ausführungsform sind, im Bereich des Hohlkörpers 24, welche in einem Stoßfänger 29 angeordnet ist, und welcher bereichsweise den Außenbereich 23 des Stoßfängers 29 bildet, zwei Gasschallsensoren 28 bzw. Sensoreinheiten 1 angeordnet. Die Sensoreinheit 1 ist dabei bevorzugt und wie dargestellt in einem Elastomer 5 eingebettet. Es kann auch vorgesehen sein, dass wenigsten der Teil des Stoßfängers 29, welcher den Hohlkörper 24 aufweist, im Wesentlichen vollständig aus stoßabsorbierendem Kunststoff 25 gebildet ist, bzw. einen solchen umfasst. Bevorzugt ist vorgesehen, dass der wenigstens eine gasgefüllte Hohlkörper 24 in der Form wenigstens eines Schallführungskanals 27 ausgebildet ist, und dass der wenigstens eine Schallführungskanal 27 Abmessungen aufweist, welche klein sind im Bezug zu den Wellenlängen in dem Frequenzbereich, welcher zur Analyse des bei einem Zusammenstoß des Fahrzeugs mit dem Hindernis in dem Hohlkörper 24 hervorgerufenen Gasschalls vorgesehen ist. Dadurch kann erreicht werden, dass in dem Hohlkörper 24 in dem Frequenzbereich, welcher analysiert wird, keine stehenden Schallwellen auftreten, da solche für ein Verfahren als störend erachtet werden. Vorzugsweise ist der Hohlkörper 24 mit Luft gefüllt, wobei insbesondere wenigstens eine Druckausgleichsöffnung 26 vorgesehen ist. Die Druckausgleichsöffnungen 26 sind bevorzugt so klein ausgeführt, dass diese nur einen langsamen Druckausgleich mit der Umgebung zulassen und für einen plötzlich eintretenden Druckanstieg unpassierbar sind. Dadurch kann erreicht werden, dass es z.B. bei einer Höhenänderung bzw. bei einer Wetteränderung, welche im Allgemeinen nicht plötzlich eintritt, zu keiner Beeinträchtigung der Funktion der Vorrichtung kommt, während ein plötzlich auftretendes Schallereignis durch einen Zusammenstoß mit einem Hindernis unbeeinträchtigt verarbeitet analysiert werden kann. Die in Fig. 1 veranschaulichte Ausführungsform der Erfindung beinhaltet die bereits beschriebene Sensoreinheit 1 zur Aufnahme des Gasschalls und eine mit der Sensoreinheit 1 gekoppelte Signalverarbeitungseinheit 2. Die Sensoreinheit 1 umfasst weiters bevorzugt einen Mikrofonvorverstärker 7 und einen Analog-Digital-Wandler 8. Dieser Teil der Vorrichtung wandelt den Luftschall, der durch den Aufprall eines Objektes an dem Hohlkörper 24 entsteht in ein elektrisches Schallsignal um. Dieses Schallsignal wird in dem Analog-Digital-Wandler 8 nach vorzugsweise gängigen Audiostandards digitalisiert und an ein erstes Kommunikationsinterface 11 weitergegeben, in welchem das nun digitale Schallsignal für die Weiterverarbeitung vorbereitet werden kann.

Zur Kalibrierung und Funktionsprüfung des Kondensatormikrophons 3 ist, wie bereits dargelegt, ein in unmittelbarer Nähe der Mikrofonkapsel angeordneter elektrostatischer Aktuator 6 angeordnet, welcher insbesondere als Gitter ausgebildet ist und unter Wechselspannung gesetzt werden kann. Der elektrostatische Aktuator 6 wird bevorzugt über einen Digital- Analog Wandler 9 mit nachgeschaltetem Leistungsverstärker 10 angesteuert und kann so verschiedene Testsignale ausgeben, wobei die Testsignale insbesondere von einem der Signalverarbeitungseinheit 2 zugehörigen Frequenzgenerator erzeugt werden. So wird die Membran des Kondensatormikrophons 3 durch das sich ausbildende elektrostatische Wechselfeld in Schwingung versetzt. Das, an die AD bzw. DA Wandler 8 und 9 angekoppelte, erste Kommunikationsinterface 11 führt eine Signalaufbereitung, wie Emphasis, Filterung und dergleichen, auf digitaler Ebene durch.

Sämtliche vorstehend genannten Komponenten können in einer kompakten, hermetisch geschlossenen Einheit verbaut und im Bereich des Hohlkörpers 24 angeordnet werden. Die Sensoreinheit 1 ist bevorzugt, über geeignete Steckverbindungen und ein Kabel, insbesondere ein Multicorekabel 12, digital (etwa im AES-EBU oder I2S Standard) mittels des ersten Kommunikationsinterface 11 mit der Signalverarbeitungseinheit 2, insbesondere dem, dieser zugehörigen, ersten Kommunikationsinterface 13, verbunden. Über diese Verbindung kann auch die Signalaufbereitungseinheit 4 mit Strom versorgt werden.

Die Signalverarbeitungseinheit 2 dient zur Analyse und Auswertung der von der Signalaufbereitungseinheit 4 bereitgestellten digitalen Schallsignale. Die Daten aus der Sensoreinheit 1 werden über das zweite Kommunikationsinterface 13 empfangen. Die Signalverarbeitungseinheit 2 weist in der bevorzugten Ausführungsform eine Transformationseinheit auf, zur Transformation wenigstens eines von dem Gasschallsensor 28 detektierten Schallsignals vom Zeitbereich in einen Bildbereich, wobei die Transformationseinheit insbesondere als Wavelet-Transformationseinheit ausgebildet ist

Die Signalverarbeitungseinheit 2 weist weiters wenigstens eine Datenbank 15 mit wenigstens einem gespeicherten und insbesondere experimentell ermittelten Fußgängerreferenzsignal auf Insbesondere ist vorgesehen, dass in der Datenbank 15 eine vorgebbare Mehrzahl an Fußgängerreferenzsignalen gespeichert ist. Diese Referenzsignale werden bei Crashtests mit unterschiedlichen Objekten gewonnen. Zum Vergleich der gespeicherten Fußgängerreferenzsignale mit den durch die Sensoreinheit 1 ermittelten Schallsignalen weist die Signalverarbeitungseinheit 2 bevorzugt eine Einheit zum Vergleich des in den Bildbereich transformierten Schallsignals mit dem wenigstens einen in der Datenbank 15 gespeicherten Fußgängerreferenzsignal auf.

Bei der besonders bevorzugten Ausführungsform gemäß Fig. 1 ist vorgesehen, dass die Transformationseinheit und die Einheit zum Vergleich des in den Bildbereich transformierten Schallsignals mit dem wenigstens einen in der Datenbank 15 gespeicherten Fußgängerreferenzsignal durch einen programmierbaren Digitalen Signalprozessor (DSP) 14 gebildet werden, welcher insbesondere auf einer sog. DSP-Karte 14 angeordnet ist. Bevorzugt werden in der DSP- Karte 14 sämtliche Berechnungen durchgeführt, die zur Unterscheidung von aufprallenden Körpern notwendig sind. Der ebenfalls an die DSP- Karte 14 gekoppelte Zwischenspeicher 16 dient zur Kompensation von verschiedenen systembedingten Laufzeiten. Bevorzugt ist vorgesehen, dass an wenigstens einem Außenteil des Fahrzeuges, insbesondere am Außenbereich 23 des wenigstens einen Stoßfängers 29, wenigstens ein Kontaktsensor 17 angeordnet ist, welcher mit der Signalverarbeitungseinheit 2 verbunden ist. Ein derartiger Kontaktsensor 17 kann etwa als kapazitiver Schalter ausgebildet sein.

Die Signalverarbeitungseinheit 2 ist weiters bevorzugt an einem fahrzeugeigenen Datenbusse 18 angeschlossen. So lassen sich für den aktiven Fußgängerschutz relevante Daten zum Fahrzustand, wie Fahrgeschwindigkeit, Bremseingriff etc. abfragen. Der Kontaktsensor 17 und der Datenbus 18 sind dabei an eine Eingangsstufe 20 der Signalverarbeitungseinheit 2 angeschlossen, welche die eingehenden Daten für eine Weiterverarbeitung in der Signalverarbeitungseinheit 2 aufbereitet.

Durch die Signalverarbeitungseinheit 2 wird eine Fußgängerschutzeinrichtung 19 angesteuert. Mit der Auswertung der Daten aus der Sensoreinheit 1, dem Kontaktsensor 17 und den externen Fahrzustandsdaten wird in der Signalverarbeitungseinheit 2 entschieden, ob im Falle eines Aufpralls eines Objektes auf das Fahrzeug eine aktive Fußgängerschutzeinrichtung 19 ausgelöst werden soll oder nicht.

Zusätzlich kann über die Leitung 22 ein Fahrzeuginnenraummikrofon angeschlossen werden welches den Fahrzeuginnenraum überwacht, um mögliche Störgeräusche, die beispielsweise durch sehr laute Audioanlagen im Fahrzeug entstehen, können zu detektieren und gegebenenfalls zu kompensieren.

Weitere nicht dargestellte Sensoreinheiten 1 können über die Leitung 21 dem zweiten Kommunikationsinterface 13 zugeführt werden.

Zur Funktionsweise der Erfindung: Man kann davon ausgehen, dass vom Beginn des Aufpralles einer Person, also dem ersten Kontakt des Beines der Person mit dem Stoßfänger des Fahrzeuges, bis zum Auftreffen des Kopfes auf der Motorhaube je nach Körpergröße und Fahrzeuggeschwindigkeit 60 bis 250 Millisekunden vergehen. Zu diesem Zeitpunkt muss sich eine aktive Fußgängerschutzeinrichtung 19 bereits völlig in Arbeitsposition befinden. Daher steht eine Zeitspanne von ca. 30ms zur Detektion und Entscheidung Person/Gegenstand zur Verfügung. Das System ist in einem festlegbaren Geschwindigkeitsbereich, vorzugsweise von 20km/h bis 60 km/h, aktiv.

In einer ersten Phase der Detektion und Segmentierung empfängt die Signalverarbeitungseinheit 2 ständig Daten von der Sensoreinheit 1 und legt sie kurz im Zwischenspeicher 16 ab. Wenn der Kontaktsensor 17 im Stoßfänger 29 einen Aufprall registriert, beginnt die Segmentierung des Schallsignals für die Auswertung. Dieser Zeitpunkt ist in Fig. 3 als t₀ bezeichnet. Zum Ausgleich etwaiger systembedingter Latenzzeiten zwischen dem tatsächlichen Beginn des Aufpralls und dem Ansprechen des Kontaktsensors 17 kann der Signalverlauf des Mikrofons 3 mit Hilfe des Zwischenspeichers 16 auch in die Vergangenheit zurückverfolgt werden, diese Latenzzeit ist mit *tₗₐₜ* bezeichnet. Das für die Auswertung auf der DSP- Karte 14 herangezogene Signalsegment beginnt also beim Zeitpunkt *t₀ - tₗₐₜ* und dauert typischerweise 10-20ms bis zum Zeitpunkt *t₁*.

In einer zweiten Phase 2 erfolgt ein Vergleich mit wenigstens einem Fußgängerreferenzsignal: Sobald das Signalsegment vorliegt, beginnt der Vergleichsprozess mit den entsprechenden Fußgängerreferenzsignalen aus der Datenbank 15. Je nach Geschwindigkeit zum Aufprallzeitpunkt werden die entsprechenden Fußgängemferenzsigade in die DSP- Karte 14 geladen und mit Mitteln der digitalen Signalverarbeitung auf Ähnlichkeit zum Signalsegment untersucht. Die Analyse erfolgt im Zeit- und Frequenzbereich mit Hilfe der Wavelet- Analyse und/ oder Cepstralbereich. Dabei sind neben Methoden wie Korrelation und Faltung/Entfaltung auch Pattern-Matching-Verfahren, Nearest- Neighbour- Verfahren, Stochastische Verfahren und weitere Geeignete zulässig. Diese Untersuchungen von Ähnlichkeiten zwischen dem Signalsegment und den Fußgängerreferenzsignalen werden aufgrund der geringen zur Verfügung stehenden Zeit parallel im DSP 14 durchgeführt. Überschreitet die Ähnlichkeit zwischen einem Fußgängerteferenzsignal und dem Signalsegment eine definierte Schwelle, wird der Befehl zur Auslösung der Fußgängerschutzeinrichtung 19 gegeben.

Die Fußgängerreferenzsignale werden in einer Crashtest-Versuchsreihe mit genau definierten Aufprallgeschwindigkeiten gewonnen. Da Aufprallgeräusche stark fahrzeugspezifisch sind, muss eine individuelle Datenbank 15 für jeden Fahrzeugtyp erstellt werden. Bei der Erstellung dieser Datenbank 15 werden Prüfkörper im möglichst freien Flug gegen die Fahrzeugfront bzw. den Stoßfänger 29 geschossen und das jeweilige Aufprallgeräusch mit der oben beschriebenen Sensoreinheit 1 aufgezeichnet. Dabei sind drei Arten von Prüfkörpern bevorzugt vorgesehen:
1. Standardisierte Fußgängerschutz Legform
2. Acoustic Legform Familie
3. PMHS (Post Mortem Human Subjects)

Da die in Punkt 3 beschriebenen PMHS Versuche mit menschlichen Leichen (oder Leichenteilen) ethisch bedenklich sind und die standardisierte Legform zwar gesetzliche Forderungen erfüllt, vom Aüfprallgeräusch her aber nicht unbedingt immer der Realität entsprechen muss, kommt im Idealfall die sog. Acoustic Legform Familie zum Einsatz. So entstehen für jeden Geschwindigkeitsbereich mit unterschiedlichen Prüfkörpern eigene Referenzdatensätze.

Eine Acoustic Legform erzeugt beim Aufprall auf ein Hindernis das gleiche Aufprallgeräusch, wie dies ein menschliches Bein äquivalenter Größe tun würde. Sie ist dem anatomischen Aufbau eines Beines nachempfunden und besitzt ebenfalls eine steife Grundstruktur mit flexiblem Kunststoff darüber. Die Acoustic Legform Familie beinhaltet Legforms unterschiedlicher Länge, Dicke und Masse entsprechend unterschiedlicher Personenzielgruppen (Kinder, Jugendliche und Erwachsene unterschiedlicher Statur). Da bei Kindern aufgrund der Größe nicht nur das Bein sondern auch ein Teil des Torsos beim Erstkontakt betroffen ist, kann in diesem Fall zusätzlich zur Legform ein Acoustic Torso Verwendung finden.

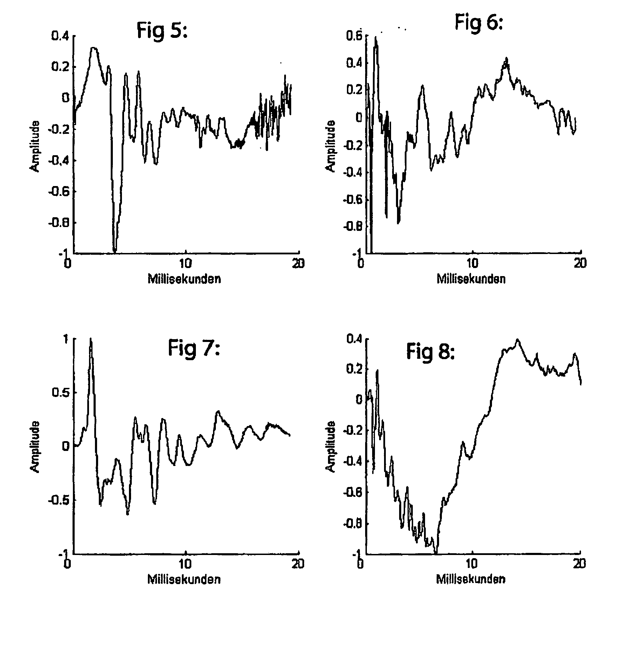

Wie aus den Fig. 5 bis 8 zu erkennen ist, weist jede mit einem bestimmten Objekt stattfindende Kollision eines Fahrzeugs spezifische Geräusche auf. So zeigt Fig. 5 das bei einer Kollision mit einem Standard Legform, Fig. 6 mit einem PVC Rohr, Fig. 7 mit einem Rinderfuß und Fig. 8 mit einem Fußball entstehende Geräusch.

Unterschiedliche Merkmale der vorliegenden Erfindung sind in der Art zu verstehen, dass diese miteinander kombinierbar sind, um verschiedene andere Modifikationen und Variationen der vorliegenden Erfindung zu erreichen.

## Patentansprüche

1. Vorrichtung zum Personen- und Kollisionsschutz an einem Fahrzeug, mit wenigstens einem Gasschallsensor (28), der an einem Außenteil des Fahrzeugs akustisch angekoppelt, und mit einer Signalverarbeitungseinheit (2) verbunden ist, zur Analyse eines Schallsignals, welches bei einem Zusammenstoß des Fahrzeugs mit einem Hindernis erzeugt und von dem Gasschallsensor (28) detektiert wird, wobei an dem Außenteil des Fahrzeugs wenigstens ein gasgefüllter Hohlkörper (24) angeordnet ist, sodass bei einem Zusammenstoß des Fahrzeugs mit dem Hindernis der Hohlkörper (24) in Kontakt mit dem Hindernis steht, und dass der Gasschallsensor (28) derart mit dem Hohlkörper (24) zusammenwirkt, dass dieser den durch den Zusammenstoß des Fahrzeugs mit dem Hindernis in dem Hohlkörper (24) hervorgerufenen Gasschall detektiert, wobei die Signalverarbeitungseinheit (2) Mittel zur Bestimmung eines Hindernisses als menschliches Hindernis aufweist **dadurch** gekenntzeichnet, dass der wenigstens eine Gasschallsensor (28) als Kondensatormikrophon (3) ausgebildet ist, und dass im Bereich einer Mikrophonmembran des Kondensatormikrophons (3) ein elektrostatischer Aktuator (6) angeordnet ist.

2. Vorrichtung nach Anspruch 1, **dadurch gekennzeichnet, dass** der wenigstens eine gasgefüllte Hohlkörper (24) an einem Außenbereich (23) wenigstens eines Stoßfängers (29) des Fahrzeugs angeordnet ist.

3. Vorrichtung nach Anspruch 1 oder 2, **dadurch gekennzeichnet, dass** der wenigstens eine gasgefüllte Hohlkörper (24) in der Form wenigstens eines Schallführungskanals (27) ausgebildet ist, und dass der wenigstens eine Schallführungskanal (27) Abmessungen aufweist, welche klein sind im Bezug zu den Wellenlängen in dem Frequenzbereich, welcher zur Analyse des bei einem Zusammenstoß des Fahrzeugs mit dem Hindernis in dem Hohlkörper (24) hervorgerufenen Gasschalls vorgesehen ist, sodass der gasgefüllte Hohlkörper (24) in diesem Frequenzbereich frei von stehenden Schallwellen ist.

4. Vorrichtung nach Anspruch 1, 2 oder 3, **dadurch gekennzeichnet, dass** an wenigstens einem Außenteil des Fahrzeuges, insbesondere am Außenbereich (23) des wenigstens einen Stoßfängers (29), wenigstens ein Kontaktsensor (17) angeordnet ist, welcher mit der Signalverarbeitungseinheit (2) verbunden ist.

5. Vorrichtung nach einem der Ansprüche 1 bis 4, **dadurch gekennzeichnet, dass** der wenigstens eine Gasschallsensor (28) in einem schwingungsdämpfenden Medium, insbesondere beinhaltend wenigstens ein Elastomer (5), vorzugsweise beinhaltend Silikonkautschuk, eingebettet ist.

6. Vorrichtung nach einem der Ansprüche 1 bis 5, **dadurch gekennzeichnet, dass** das Kondensatormikrophon (3) als Elektretmikrophon, ausgebildet ist.

7. Vorrichtung nach einem der Ansprüche 1 bis 6, **dadurch gekennzeichnet, dass** der elektrostatische Aktuator (6) wenigstens ein elektrisch leitendes Gitter aufweist, welches vor der Mikrophonmembran angeordnet ist, und dass das Gitter von einem Signalgenerator, welcher insbesondere Teil der Signalverarbeitungseinheit (2) ist, mit einem vorgebbaren Wechselspannungssignal beaufschlagbar ist.

8. Vorrichtung nach einem der Ansprüche 1 bis 7, **dadurch gekennzeichnet, dass** die Signalverarbeitungseinheit (2) eine Transformationseinheit aufweist, zur Transformation wenigstens eines von dem Gasschallsensor (28) detektierten Schallsignals vom Zeitbereich in einen Bildbereich.

9. Vorrichtung nach Anspruch 8, **dadurch gekennzeichnet, dass** die Transformationseinheit als Wavelet-Transformationseinheit ausgebildet ist.

10. Vorrichtung nach einem der Ansprüche 1 bis 9, **dadurch gekennzeichnet, dass** die Signalverarbeitungseinheit (2) eine Datenbank (15) mit wenigstens einem gespeicherten Fußgängerreferenzsignal aufweist.

11. Vorrichtung nach Anspruch 10, **dadurch gekennzeichnet, dass** die Signalverarbeitungseinheit (2) eine Einheit zum Vergleich des in den Bildbereich transformierten Schallsignals mit dem wenigstens einen in der Datenbank (15) gespeicherten Fußgängerreferenzsignal aufweist.

12. Vorrichtung nach einem der Ansprüche 1 bis 11, **dadurch gekennzeichnet, dass** die Signalverarbeitungseinheit (2) eine Fußgängerschutzeinrichtung (19) ansteuert.

## Claims

1. An apparatus for the protection of people and collision on a vehicle, having at least one gas sound sensor (28) which is acoustically coupled to an outer part of the vehicle and connected with a signal processing unit (2) for an analysis of a sound signal which is generated during a crash of the vehicle with an obstacle and detected by the gas sound sensor (28), wherein at least one gas filled hollow container (24) is arranged at the outer part of the vehicle so that the hollow container (24) is in contact with the obstacle during a crash of the vehicle with the obstacle, and that the gas sound sensor (28) interacts with the hollow container (24) in such a manner that the gas sound sensor detects gas sound caused by the crash of the vehicle with the obstacle, wherein the signal processing unit (2) comprises means for a determination of an obstacle as human obstacle, **characterized in that** the at least one gas sound sensor (28) is formed as a condenser microphone (3), and that an electrostatic actuator (6) is arranged within the range of a microphone membrane of the condenser microphone (3).

2. The apparatus according to claim 1, **characterized in that** the at least one gas filled hollow container (24) is arranged at an outer section (23) of at least one bumper (29) of the vehicle.

3. The apparatus according to claim 1 or 2, **characterized in that** the at least one gas filled hollow container (24) is formed in the form of at least one sound guide channel (27), and that the at least one sound guide channel (27) comprises dimensions which are small with regard to the wavelengths in the frequency range being destined for an analysis of the gas sound caused in the hollow container (24) during a crash of the vehicle with the obstacle so that the gas filled hollow container (24) is free of standing sound waves in this frequency range.

4. The apparatus according to claim 1, 2 or 3, **characterized in that** at least one contact sensor (17), which is connected to the signal processing unit (2), is arranged on at least one outer part of the vehicle, particularly on an outer section (23) of the at least one bumper (29).

5. The apparatus according to any one of the claims 1 to 4, **characterized in that** the at least one gas sound sensor (28) is embedded in a vibration damping medium, particularly containing an elastomer (5), more particularly containing silicone rubber.

6. The apparatus according to any one of the claims 1 to 5, **characterized in that** the condenser microphone (3) is formed as an electret microphone.

7. The apparatus according to any one of the claims 1 to 6, **characterized in that** the electrostatic actuator (6) comprises at least one electrically conducting grid arranged in front of the microphone membrane, and that the grid is admittable with a presettable alternating voltage signal from a signal generator which is in particular part of the signal processing unit (2).

8. The apparatus according to any one of the claims 1 to 7, **characterized in that** the signal processing unit (2) comprises a transformation unit for transforming at least one of the sound signals detected by the gas sound sensor (28) from a time domain into an image domain.

9. The apparatus according to claim 8, **characterized in that** the transformation unit is formed as wavelet-transformation unit.

10. The apparatus according to any one of the claims 1 to 9, **characterized in that** the signal processing unit (2) comprises a data base (15) having at least one stored pedestrian reference signal.

11. The apparatus according to claim 10, **characterized in that** the signal processing unit (2) comprises a unit for comparing the sound signal transformed into the image domain with the at least one pedestrian reference signal stored in the data base (15).

12. The apparatus according to any one of the claims 1 to 11, **characterized in that** the signal processing unit (2) controls a pedestrian safety arrangement (19).

## Revendications

1. Dispositif pour la protection des personnes et des accidents d'un véhicule, avec au moins un capteur de son de gaz (28) qui est couplé acoustiquement à une partie extérieure du véhicule et est relié à une unité de traitement de signal (2) pour l'analyse d'un signal sonore qui est généré en cas de collision du véhicule avec un obstacle et est détecté par le capteur de son de gaz (28), sachant qu'au moins un corps creux (24) rempli de gaz est disposé sur la partie extérieure du véhicule de sorte qu'en cas de collision du véhicule avec l'obstacle, le corps creux (24) soit en contact avec l'obstacle, et en ce que le capteur de son de gaz (28) co-agit avec le corps creux (24) de telle manière que celui-ci détecte le son du gaz suscité par la collision du véhicule avec l'obstacle dans le corps creux (24), sachant que l'unité de traitement de signal (2) présente des moyens pour la détermination d'un obstacle comme obstacle humain, **caractérisé en ce qu'**au moins un capteur de son de gaz (28) est réalisé comme un microphone électrostatique (3) et **en ce qu'**un actionneur (6) électrostatique est disposé dans la zone d'une membrane du microphone électrostatique (3).

2. Dispositif selon la revendication 1, **caractérisé en ce qu'**au moins un corps creux rempli de gaz (24) est disposé sur une zone extérieure (23) d'au moins un pare-chocs (29) du véhicule.

3. Dispositif selon la revendication 1 ou 2, **caractérisé en ce qu'**au moins un corps creux rempli de gaz (24) est réalisé sous la forme d'au moins un canal de guidage de son (27), et **en ce qu'**au moins un canal de guidage de son (27) présente des petites dimensions par rapport aux longueurs d'ondes dans la gamme de fréquences qui est prévue pour l'analyse du son du gaz suscité en cas de collision du véhicule avec l'obstacle dans le corps creux (24) de sorte que le corps creux rempli de gaz (24) soit exempt d'ondes sonores stationnaires dans cette gamme de fréquences.

4. Dispositif selon la revendication 1, 2 ou 3, **caractérisé en ce qu'**au moins un capteur de contact (17) est disposé sur au moins une partie extérieure du véhicule, en particulier sur la zone extérieure (23) d'au moins un pare-chocs (29), lequel capteur est relié à l'unité de traitement de signal (2).

5. Dispositif selon l'une quelconque des revendications 1 à 4, **caractérisé en ce qu'**au moins un capteur de son de gaz (28) est inséré dans un milieu amortissant les oscillations, en particulier contenant au moins un élastomère (5), de préférence contenant du caoutchouc de silicone.

6. Dispositif selon l'une quelconque des revendications 1 à 5, **caractérisé en ce que** le microphone électrostatique (3) est réalisé comme un microphone à électret.

7. Dispositif selon l'une quelconque des revendications 1 à 6, **caractérisé en ce que** l'actionneur (6) électrostatique présente au moins une grille électroconductrice agencée avant la membrane du microphone, et **en ce que** la grille peut être alimentée en un signal de tension alternative prescriptible par un générateur de signaux qui fait partie notamment de l'unité de traitement de signal (2).

8. Dispositif selon l'une quelconque des revendications 1 à 7, **caractérisé en ce que** l'unité de traitement de signal (2) présente une unité de transformation pour la transformation d'au moins un signal sonore détecté par le capteur de son de gaz (28) d'une plage de temps en une plage d'image.

9. Dispositif selon la revendication 8, **caractérisé en ce que** l'unité de transformation est réalisée comme une unité de transformation en ondelettes.

10. Dispositif selon l'une quelconque des revendications 1 à 9, **caractérisé en ce que** l'unité de traitement de signal (2) présente une base de données (15) dotée d'au moins un signal de référence de piéton enregistré.

11. Dispositif selon la revendication 10, **caractérisé en ce que** l'unité de traitement de signal (2) présente une unité pour la comparaison du signal sonore transformé en plage d'image avec au moins un signal de référence de piéton enregistré dans la base de données (15).

12. Dispositif selon l'une quelconque des revendications 1 à 11, **caractérisé en ce que** l'unité de traitement de signal (2) commande un dispositif de protection des piétons (19).
